# EUROPÄISCHE PATENTANMELDUNG

(11) **EP 4 847 170 A1**
(43) Veröffentlichungstag der Anmeldung: **02.12.2026**
(21) Anmeldenummer: 25179311.3
(22) Anmeldetag: 28.05.2025
(51) Int. Cl.: B23B 5/12, B23B 27/14

(54) **DOPPELSEITIGER SCHNEIDEINSATZ ZUM SCHÄLDREHEN**

(71) Anmelder: CERATIZIT Austria Gesellschaft m.b.H., 6600 Reutte (AT)
(72) Erfinder: FRIEDL, Roland, 6600 Reutte (AT)
(74) Vertreter: Ciesla, Dirk

(57) **Zusammenfassung**

Doppelseitiger, beidseitig verwendbarer Schneideinsatz (1) zum Schäldrehen mit polygonaler Grundform mit einer Oberseite (100) und einer davon verschiedenen Unterseite (200), Seitenflächen (300), an deren Übergang zu Oberseite (100) und Unterseite (200) Seitenkanten (310, 320) ausgebildet sind, welche Seitenkanten (310, 320) zumindest abschnittsweise als Schneidkanten (110, 210) ausgebildet sind,
wobei an der Oberseite (100) abschnittsweise Spanformstrukturen (400, 410) und an der Unterseite (200) abschnittsweise Spanformstrukturen (400, 420) ausgebildet sind, welche sich ausgehend von den Schneidkanten (110, 210) an der Oberseite (100) und der Unterseite (200) erstrecken,
wobei eine Außenkontur der Oberseite (100) verschieden ist von einer Außenkontur der Unterseite (200) derart, dass eine Draufsicht auf die Oberseite (100) inkongruent zu einer Draufsicht auf die Unterseite (200) ist.

## Beschreibung

Die vorliegende Erfindung ist auf einen doppelseitigen Schneideinsatz zum Schäldrehen mit den Merkmalen des Oberbegriffs von Anspruch 1 sowie auf eine Anordnung von Schneideinsätzen zum Schäldrehen gerichtet. Ferner betrifft die Erfindung auch ein Verfahren zum Schäldrehen sowie einen Plattenhalter.

Schäldrehen (engl. *bar peeling*) ist ein spanabhebendes Bearbeitungsverfahren zum Abtragen äußerer Materialschichten von gewalzten oder geschmiedeten Rohlingen mit rundem Querschnitt. Beim Schäldrehen wird das Werkstück - in der Regel eine Stange oder ein dickwandiges Rohr - von Walzen zentriert durch ein rotierendes Werkzeug, den Schälkopf, geführt. Das Schäldrehen ist der Schwerzerspanung zugeordnet und ist mit hohen Schnitttiefen und Zerspanungskräften verbunden. Die beim Schäldrehen verwendeten Schneideinsätze werden auch als Schälplatten bezeichnet.

Aus der WO2010/114201 A1 (TAEGUTEC) ist ein beidseitig verwendbarer Schneideinsatz zum Drehen bekannt. Der darin gezeigte Schneideinsatz weist auf der für eine Grobbearbeitung vorgesehenen Seite eine umlaufende Schneidkante auf, an welche eine zum Durchgangsloch abfallende Mulde zur Spanformung angrenzt. Auf der anderen, zur Feinbearbeitung vorgesehenen Seite hat der Schneideinsatz an den Ecken ausgebildete, gegenüber einer zugeordneten Auflagefläche abgesenkte Schneidkanten, an welche Spanleitstrukturen angrenzen.

Nachteilig an bekannten Schneideinsätzen zum Schäldrehen ist unter anderem:
- die genutzte Schneidenlänge in Bezug auf das Volumen des Schneideinsatzes ist gering
- eine Abstützung des Schneideinsatzes ist unzureichend
- erzielbare Spantiefen, insbesondere bei einer Grobbearbeitung, sind gering

In der bisher unveröffentlichten Europäischen Patentanmeldung der vorliegenden Anmelderin, Anmeldenummer EP 24170694.4 vom 17. April 2024 ist ein Schneideinsatz zum Schäldrehen gezeigt, der gemäß einer Ausführungsform zweiseitig mit unterschiedlichen Deckflächen ausgebildet ist.

Aufgabe der Erfindung ist, einen verbesserten Schneideinsatz zum Schäldrehen anzugeben. Die Aufgabe wird gelöst durch eine Schälplatte mit den Merkmalen von Anspruch 1.

Indem ein doppelseitiger, beidseitig verwendbarer Schneideinsatz zum Schäldrehen vorgesehen ist,
mit polygonaler Grundform mit einer Oberseite und einer davon verschiedenen Unterseite, Seitenflächen, an deren Übergang zu Oberseite und Unterseite Seitenkanten ausgebildet sind, welche Seitenkanten zumindest abschnittsweise als Schneidkanten ausgebildet sind,
wobei an der Oberseite abschnittsweise Spanformstrukturen und an der Unterseite abschnittsweise Spanformstrukturen ausgebildet sind, welche sich ausgehend von den Schneidkanten an der Oberseite und der Unterseite erstrecken, wobei eine Außenkontur der Oberseite verschieden ist von einer Außenkontur der Unterseite derart, dass eine Draufsicht auf die Oberseite inkongruent zu einer Draufsicht auf die Unterseite ist,

ist ein beidseitig nutzbarer Schneideinsatz angegeben, der wesentliche Vorteile gegenüber bekannten Schneideinsätzen zum Schäldrehen aufweist.

Der Schneideinsatz weist in einer Draufsicht eine polygonale Grundform auf. Insbesondere weist der Schneideinsatz eine gerundete polygonale Grundform auf: das bedeutet, dass die Ecken verrundet sind.

Insbesondere kann der Schneideinsatz eine im Wesentlichen dreieckige, eine viereckige, insbesondere quadratische oder eine fünfeckige Grundform aufweisen, jeweils bezogen auf die Form einer Grundfläche. Auch eine sechs-, sieben- oder achteckige Grundform ist möglich.

Insbesondere ist die Grundform die eines gleichseitigen Polygons, also die eines gleichseitigen Dreiecks, eines Quadrats und so weiter.

Am Übergang der Seitenflächen zu Oberseite und Unterseite sind Seitenkanten ausgebildet, an welchen Seitenkanten zumindest abschnittsweise Schneidkanten ausgebildet sind. Die Anzahl der Seitenkanten pro Seite entspricht der Zähligkeit des Schneideinsatzes, das heißt dass beispielsweise ein Schneideinsatz mit dreieckiger Grundform drei Seitenkanten an jeder Seite aufweist, insgesamt also sechs Seitenkanten zählt. Somit können an einem Schneideinsatz mit dreieckiger Grundform sechs Schneidkanten ausgebildet sein. In der vorliegenden Anmeldung wird unterschieden zwischen Seitenkanten, welche sich aus der geometrischen Grundgestalt des Schneideinsatzes ergeben und Schneidkanten, die an Seitenkanten ausgebildet werden. Nicht jeder Abschnitt einer Seitenkante ist zwingend als Schneidkante ausgebildet.

Generell ist bei den vorgeschlagenen Schneideinsätzen bevorzugt durch ein Weiterdrehen ("Indexieren") des Schneideinsatzes um einen von der Grundgestalt vorgegebenen Winkelbetrag nach Verschleiß einer Seitenkante eine nächste, einer Seitenkante zugeordnete Schneidkante nutzbar. Bei einer quadratischen Grundform sind beispielsweise pro Seite vier Seitenkanten nutzbar, ein Indexieren zur nächsten Seitenkante erfolgt hier durch eine 90° Drehung.

Der erfindungsgemäße Schneideinsatz ist doppelseitig und beidseitig einsetzbar. Das bedeutet, dass sowohl die Oberseite als auch die Unterseite in einer Bearbeitungssituation als Spanfläche genutzt werden kann.

Die Begriffe "Oberseite" und "Unterseite" dienen zur sprachlichen Unterscheidung der unterschiedlich ausgebildeten Seiten. Natürlich kann der Schneideinsatz auch so zu liegen kommen, dass eine Oberseite für einen Betrachter unten liegt.

In weiterer Folge wird als Oberseite jene Seite des Schneideinsatzes bezeichnet, die für eine Grobbearbeitung, das sogenannte Schruppen ausgelegt und vorgesehen ist. Als Unterseite wird jene Seite des Schneideinsatzes bezeichnet, die für eine Feinbearbeitung, das sogenannte Schlichten ausgelegt und vorgesehen ist.

Die Auslegung der Oberseite für die Grobbearbeitung ist unter anderem insbesondere dadurch gekennzeichnet, dass Spanformstrukturen an der Oberseite tiefer und / oder breiter ausgebildet sind als Spanformstrukturen an der Unterseite, welche Unterseite für eine Feinbearbeitung, das sogenannte Schlichten ausgelegt und vorgesehen ist. Die Spanformstrukturen an der Oberseite für die Ableitung großer Spanquerschnitte weisen dabei eine größere Tiefe, das heißt Einsenkung in die Oberfläche des Schneideinsatzes und / oder eine größere laterale Erstreckung auf als Spanformstrukturen an der Unterseite für die Ableitung geringer Spanquerschnitte. Insbesondere nehmen die Spanformstrukturen an der Oberseite eine größere Fläche ein als die Spanformstrukturen an der Unterseite. Für den Fachmann sind die Unterschiede in den Spanformstrukturen von Ober- und Unterseite unmittelbar ersichtlich.

Ober- und Unterseite sind also verschieden: Ober- und Unterseite unterscheiden sich wenigstens darin, dass die daran ausgebildeten Spanformstrukturen unterschiedlich sind. Auf einer Seite sind Spanformstrukturen für eine Grobbearbeitung, auf der gegenüberliegenden Seite Spanformstrukturen für eine Feinbearbeitung ausgebildet. Diese Unterschiede in den Spanformstrukturen sind für den Fachmann unmittelbar ersichtlich.

Ober- und Unterseite verlaufen planparallel zueinander. Das heißt, eine in die Oberseite legbare Ebene ist parallel zu einer in die Unterseite legbaren Ebene.

Es ist vorgesehen, dass die Außenkontur einer Draufsicht auf die Oberseite inkongruent zur Außenkontur einer Draufsicht auf die Unterseite ist. In anderen Worten lassen sich die Außenkonturen, also die Berandungen, von Ober- und Unterseite nicht, auch durch eine Verdrehung nicht, in Deckung bringen.

Gemäß einer ersten Ausführungsform ist diese Inkongruenz von Ober- und Unterseite dadurch realisiert, dass Inkreise von Oberseite und Unterseite verschieden groß sind. Anders ausgedrückt, sind Ober- und Unterseite verschieden groß. Der Schneideinsatz hat damit in einer Seitenansicht eine konische, das heißt sich verjüngende Gestalt.

Die Außenkonturen von Oberseite und Unterseite können dabei im geometrischen Sinne ähnlich sein, das heißt eine Abbildung der Kontur der Oberseite kann durch eine zentrische Streckung in die Kontur der Unterseite überführt werden. "Streckung" kann in diesem Zusammenhang sowohl eine Vergrößerung (Dehnung) als auch eine Verkleinerung (Kontraktion) bedeuten.

Dabei kann vorgesehen sein, dass die Oberseite einen größeren Inkreis aufweist als die Unterseite oder umgekehrt, dass die Unterseite einen größeren Inkreis aufweist als die Oberseite.

Bevorzugt ist vorgesehen, dass Ober- und Unterseite nicht zueinander verdreht sind. Das bedeutet, dass nach geometrischer Definition Ober- und Unterseite über eine Projektion nach einem geraden Kegel ineinander überführbar sind.

Die Ausführungsform mit verschieden großen Inkreisen von Oberseite und Unterseite hat die vorteilhafte Wirkung, dass der Schneideinsatz in einem an die sich verjüngende Gestalt des Schneideinsatzes angepassten Plattensitz nur in einer korrekten Einbaulage eingesetzt werden kann. Der so geformte Schneideinsatz schafft die Möglichkeit eines verwechslungssicheren Einbaus. Indem seitliche Anlageflächen des Plattensitzes zumindest abschnittsweise der Neigung der Seitenflächen des Schneideinsatzes entsprechend geneigt zu einer Grundfläche des Plattensitzes verlaufend ausgeführt werden, kann der Schneideinsatz nur in einer korrekten Ausrichtung bezüglich der Oberseite und Unterseite eingesetzt werden. Es kann also sichergestellt werden, dass an einem ersten Plattensitz an einem Halter, welcher erste Plattensitz zur Aufnahme eines Schneideinsatzes in der Ausrichtung für eine Grobbearbeitung vorgesehen ist, nur ein Schneideinsatz mit korrekter Orientierung mit der für die Grobbearbeitung ausgebildeten Oberfläche, also der Grundfläche des Plattensitzes abgewandten Seite nach oben, korrekt eingesetzt werden kann.

Neben der Verwechslungssicherheit erlaubt die Ausführungsform des Schneideinsatzes mit verschieden großen Inkreisen von Oberseite und Unterseite die Gestaltung eines Plattensitzes für einen Formschluss in der Art einer Schwalbenschwanzverbindung, sodass ein vertikaler Auszug des Schneideinsatzes behindert wird.

Gemäß einer bevorzugten Ausführungsform ist die Inkongruenz der Außenkonturen von Ober- und Unterseite des Schneideinsatzes dadurch realisiert, dass der Schneideinsatz asymmetrisch bezüglich einer Außenkontur ist, insofern als wenigstens eine Seitenkante einen bezüglich ihrer Erstreckung asymmetrischen Verlauf aufweist. In anderen Worten kann entlang der wenigstens einen Seitenkante keine Spiegelachse definiert werden, entlang welcher eine Spiegelung des diesseits der Spiegelachse gelegenen Abschnitts der Seitenkante diesen in den jenseits der der Spiegelachse gelegenen Abschnitt überführt. Daraus folgt, dass eine Abbildung der Außenkontur der Oberseite inkongruent ist zu einer Abbildung der Außenkontur der Unterseite. Die Außenkonturen von Ober- und Unterseite können nicht in Deckung gebracht werden. Die Außenkonturen von Ober- und Unterseite sind im geometrischen Sinne nicht ähnlich.

Diese Ausführungsform kann allein oder in Kombination mit ersten Ausführungsform stehen, nach welcher ersten Ausführungsform die Inkongruenz durch unterschiedliche Größen von Ober- und Unterseite bewirkt wird. Die Inkongruenz der Außenkonturen von Ober- und Unterseite kann also durch unterschiedliche Größen von Ober- und Unterseite, durch eine Asymmetrie der Außenkontur einer Seitenkante oder durch Asymmetrie der Außenkontur einer Seitenkante in Kombination mit unterschiedlichen Größen von Ober- und Unterseite erzeugt werden.

Die Asymmetrie der Außenkontur wird insbesondere dadurch eingestellt, indem eine Seitenkante einen außermittig gelegenen Übergang von abgewinkelt zueinander verlaufenden Schneidenabschnitten aufweist. Diese bevorzugte Ausführungsform wird im Folgenden näher erläutert:
Eine Seitenkante ist gegliedert in eine Hauptschneide und eine Nebenschneide. Die Hauptschneide und Nebenschneide sind ungleich lang. Ein Übergang einer Hauptschneide in eine Nebenschneide liegt außermittig bezüglich der Erstreckung der Seitenkante. Bevorzugt ist die Gliederung in ungleich lange Haupt- und Nebenschneiden an allen Seitenkanten des Schneideinsatzes realisiert.

An der Oberseite des Schneideinsatzes umfasst eine Seitenkante eine Schrupp-Hauptschneide und eine dazu abgewinkelt verlaufende Schrupp-Nebenschneide. Die Schrupp-Hauptschneide ist dabei deutlich länger als die Schrupp-Nebenschneide.

An der Unterseite umfasst eine Seitenkante eine Schlicht- (englisch: wiper)-Hauptschneide und eine dazu abgewinkelt verlaufende Schlicht-Nebenschneide. Die Schlicht-Nebenschneide ist dabei deutlich länger als die Schlicht-Hauptschneide.

Somit ist vorgesehen, dass jener Längenabschnitt einer Seitenkante, welcher auf einer Seite des Schneideinsatzes als Hauptschneide und damit zum vorwiegenden Materialabtrag dient, auf der gegenüberliegenden Seite des Schneideinsatzes als Nebenschneide zum Schlichten, also zum Schaffen einer günstigen Werkstückoberfläche dient.

Näher erläutert bedeutet dies, dass auf der bezüglich der Spanformstrukturen zur Grobbearbeitung ausgebildeten Oberseite des Schneideinsatzes eine besonders lange Hauptschneide, die Schrupp-Hauptschneide, zur Einstellung einer großen Spantiefe zur Verfügung steht. Deren Entsprechung an der zur Feinbearbeitung ausgebildeten Unterseite des Schneideinsatzes ist eine folglich besonders lange Schlicht-Nebenschneide zur Einstellung einer besonders hohen Oberflächengüte.

Bevorzugt ist vorgesehen, dass eine Schneidkante an der Oberseite eine Schrupp-Hauptschneide und eine dazu abgewinkelt verlaufende Schrupp-Nebenschneide aufweist und eine Schneidkante an der Unterseite eine Schlicht-Hauptschneide und eine dazu abgewinkelt verlaufende Schlicht-Nebenschneide aufweist, wobei die Schrupp-Hauptschneide wenigstens doppelt so lang ist wie die Schrupp-Nebenschneide und die Schlicht-Nebenschneide wenigstens doppelt so lang ist wie die Schlicht-Hauptschneide.

Indem beim erfindungsgemäßen Schneideinsatz eine Seite für eine Grobbearbeitung und die andere, gegenüberliegende Seite für die Feinbearbeitung ausgelegt ist, steht an der für eine Grobbearbeitung als Spanfläche ausgebildeten Oberseite eine besonders lange Schrupp-Hauptschneide zur Verfügung. Beim Wenden des Schneideinsatz steht für die Feinbearbeitung dementsprechend eine besonders lange Schlicht-Nebenschneide zur Verfügung.

Die Asymmetrie hat damit den bedeutenden Vorteil einer besonders hohen Materialausnutzung, da für die Feinbearbeitung keine lange Hauptschneide erforderlich ist.

Bevorzugt ist vorgesehen, dass die Schrupp-Hauptschneide und die Schrupp-Nebenschneide zueinander mit einem Außenwinkel zwischen 185° und 225° verlaufen. Die Wahl erlaubt die Einstellung eines besonders günstigen Anstellwinkels der Schrupp-Hauptschneide.

Bei vorbekannten Schneideinsätzen mit einem mittig gelegenen Übergang von Haupt- in Nebenschneide, das heißt einer symmetrischen Gestalt der Seitenkante, steht für die Grobbearbeitung wenig Schneidenlänge an der Hauptschneide zur Verfügung, was die erzielbaren Spantiefen vermindert. In Folge ist für die Feinbearbeitung eine unnötig lange Hauptschneide ausgebildet. Die Erfindung überwindet diese Nachteile aus dem Stand der Technik.

Ein weiterer Vorteil der vorliegenden Asymmetrie liegt in der Montage: durch die ungleich langen und zueinander abgewinkelt verlaufenden Schneidenabschnitte ist die Möglichkeit einer eine Verwechslung von Ober- und Unterseite ausschließenden Gestaltung eines Halters geschaffen. Dazu ist vorgesehen, Anlageflächen eines Halters derart auszubilden, dass der Schneideinsatz an der voranstehenden, zur Aufnahme des für die Grobbearbeitung vorgesehenen Schneideinsatzes vorgesehenen Position nur in der richtigen Lage mit der für die Grobbearbeitung vorgesehenen Oberseite als Spanfläche eingelegt werden kann.

Alternativ oder zusätzlich können Anlageflächen des Halters an der nachstehenden, für eine Feinbearbeitung vorgesehenen Position so ausgebildet sein, dass der für die Feinbearbeitung vorgesehene Schneideinsatz nur in der richtigen Lage mit der für die Feinbearbeitung vorgesehenen Unterseite als Spanfläche eingelegt werden kann.

In einer Einbaulage zum Schäldrehen wird der bezüglich einer Bearbeitungsrichtung voranstehende Schneideinsatz derart orientiert in einem Halter eingebaut, dass die in dieser Anmeldung als Oberseite bezeichnete Seite mit Spanformstrukturen für eine Grobbearbeitung als Spanfläche wirkt. Der bezüglich der Bearbeitungsrichtung nachstehende Schneideinsatz wird derart orientiert in einem Halter eingebaut, dass die in dieser Anmeldung als Unterseite bezeichnete Seite mit Spanformstrukturen für eine Feinbearbeitung als Spanfläche wirkt.

Bevorzugt kann vorgesehen sein, dass der Schneideinsatz - nach mathematischer Definition - die Gestalt eines geraden Zylinders aufweist. Ist eine Grundfläche ein Vieleck, hat der Schneideinsatz die Gestalt eines geraden Prismas. Die Seitenflächen stehen normal auf Ober- und Unterseite. Die Oberseite ist planparallel zur Unterseite. Die Gestalt erleichtert die Herstellung des Schneideinsatzes über ein Pressen.

In einer Ausführungsform ist der Schneideinsatz gemäß der in der Zerspanung üblichen Definition "negativ". Ein Schneideinsatz wird als negativ bezeichnet, wenn der geometrische Spanwinkel Null ist. Anders ausgedrückt: da die Seitenflächen mit Ober- und Unterseite einen rechten Winkel bilden und die Winkel am Schneidteil, Freiwinkel, Keilwinkel und Spanwinkel zusammen 90° ergeben, ist der geometrische Spanwinkel Null.

Insbesondere bevorzugt ist es, dass die von Spanformstrukturen an der Oberseite eingenommene Fläche größer ist als von Spanformstrukturen an der Unterseite eingenommene Fläche, betrachtet in einer Draufsicht auf die jeweilige Oberfläche.

Bevorzugt ist vorgesehen, dass an der Oberseite und an der Unterseite abschnittsweise eine plane Auflagefläche zur Auflage des Schneideinsatzes in einem Plattensitz ausgebildet ist, wobei die plane Auflagefläche an der Oberseite kleiner ist als die plane Auflagefläche an der Unterseite. Es ist also bevorzugt vorgesehen, dass eine nicht von Spanformstrukturen erfasste Fläche an der Unterseite größer ist als eine nicht von Spanformstrukturen erfasste Fläche an der Oberseite. Das hat den Vorteil, dass zur Aufnahme von Kräften bei der Zerspanung an der Unterseite eine besonders große plane Auflagefläche zur Verfügung steht. Dazu muss verstanden werden, dass in der Einbaulage des Schneideinsatzes für die Grobbearbeitung, das heißt mit der Oberseite als Spanfläche wirkend, die Unterseite in einem Halter zur Anlage kommt. Die Kräfte auf den Schneideinsatz in der Verwendung für die Grobbearbeitung sind größer als die Kräfte auf den Schneideinsatz in der Verwendung für die Feinbearbeitung. Somit ist es besonders vorteilhaft, dass an der Unterseite zur günstigen Abstützung der Kräfte aus der Grobbearbeitung eine größere plane Auflagefläche zur Verfügung steht.

Insbesondere ist vorgesehen, dass sich plane Auflageflächen bis an die Ecken des Schneideinsatzes erstrecken. In anderen Worten sind die Ecken des Schneideinsatzes bevorzugt frei von Schneidkanten und / oder Spanformstrukturen. Dies hat den Vorteil, dass eine Abstützung lokal bis an den Rand erfolgen kann.

An den Ecken ist der Schneideinsatz bevorzugt frei von Spanleitstrukturen und frei von einer definierten Schneidkante. Damit ist gemeint, dass zwar geometriebedingt in einem Eckenbereich eine Seitenkante zwischen Seitenfläche und Oberfläche vorliegt, diese aber nicht über Ausbildung von daran angrenzender Spanformstruktur und / oder Fasen und / oder einer Schneidkantenpräparation als Schneidkante ausgeführt und vorgesehen ist.

Insbesondere ist an einem Abschnitt der Schneidkante der Unterseite, also an der zur Feinbearbeitung vorgesehenen Seite, eine Stützfase ausgebildet. Dies trägt weiter günstig zur Oberflächengüte bei.

Bevorzugt ist vorgesehen, dass ein Verhältnis der Länge der Schrupp-Hauptschneide zur Länge der Seitenkante der Oberseite zwischen 0,60 und 0,90 beträgt. Gleiches gilt für die Länge der Schlicht-Nebenschneide in Relation zur Seitenkante an der Unterseite. Diese Verhältnisse bringen die vorteilhaft großen Längen der Schrupp-Hauptschneide bzw. der Schlicht-Nebenschneide bei einer gegebenen Abmessung des Schneideinsatzes zum Ausdruck.

Bevorzugt ist vorgesehen, dass ein Verhältnis der Länge der Schrupp-Hauptschneide zum Durchmesser eines Inkreises des Schneideinsatzes für
- dreieckige Schneideinsätze zwischen 0,75 und 1,25 beträgt, für
- quadratische Schneideinsätze zwischen 0,50 und 0,80 beträgt und für
- fünfeckige Schneideinsätze zwischen 0,50 und 0,80 beträgt.

Diese Verhältnisse reflektieren die vorteilhafte Ausnutzung einer gegebenen Abmessung des Schneideinsatzes in nutzbare Länge der Schrupp-Hauptschneide. Die Verhältnisse gelten gleichermaßen für die Ausdehnung der Schlicht-Nebenschneide in Relation zum Inkreisdurchmesser.

Der Schneideinsatz ist bevorzugt aus Hartmetall oder einem Cermet. Hauptbestandteile von Hartmetall sind Wolframkarbidkörner, die von einem metallischen Binder umgeben sind. Der metallische Binder weist als Hauptbestandteile Kobalt und / oder Nickel, insbesondere Kobalt auf.

Die Herstellung erfolgt insbesondere durch uni-direktionales Pressen. Bei einer Gestaltung des Schneideinsatzes als gerades Prisma ist die Herstellung zusätzlich erleichtert.

Schäldrehen ist ein Verfahren der Schwerzerspanung. Die dafür eingesetzten Schneideinsätze sind dementsprechend massiv. Typische Abmessungen eines Inkreisdurchmessers betragen 15-50 mm.

Schutz wird auch begehrt für eine Anordnung von erfindungsgemäßen Schneideinsätzen und für einen Halter.

Die erfindungsgemäße Anordnung umfasst einen Halter und wenigstens zwei erfindungsgemäße Schneideinsätze, wobei der bezüglich einer vorgesehenen Bearbeitungsrichtung voranstehende Schneideinsatz mit der Oberseite als Spanfläche angeordnet ist und der bezüglich der vorgesehenen Bearbeitungsrichtung hintere Schneideinsatz mit der Unterseite als Spanfläche angeordnet ist.

Bezüglich der Anordnung ist bevorzugt vorgesehen, dass der voranstehende Schneideinsatz mit einem ersten Anstellwinkel angestellt derart ist, dass die Schrupp-Nebenschneide zumindest abschnittsweise parallel zur vorgesehenen Bearbeitungsrichtung verläuft.

Für den nachstehenden, mit der Unterseite nach oben orientierten Schneideinsatz für die Feinbearbeitung ist vorgesehen, dass die Schlicht-Nebenschneide parallel zur vorgesehenen Bearbeitungsrichtung verläuft.

Für den Halter ist bevorzugt vorgesehen, dass seitliche Anlageflächen der am Halter ausgebildeten Plattensitze jeweils Konturlinien zu einer Halteroberfläche bilden und die Konturlinien der Plattensitze inkongruent sind. Damit ist ein verwechslungssicherer Einbau entsprechender Schneideinsätze möglich.

Ferner wird Schutz begehrt für ein Verfahren zum Schäldrehen. Dabei ist vorgesehen, dass ein Schäldrehen mit wenigstens zwei, bevorzugt genau zwei, gleichen Schneideinsätzen durchgeführt wird, die eine von der Oberseite verschiedene Unterseite aufweisen und wobei eine Außenkontur der Oberseite verschieden ist von einer Außenkontur der Unterseite derart, dass eine Draufsicht auf die Oberseite inkongruent zu einer Draufsicht auf die Unterseite ist. In einem Halter sind wenigstens zwei gleiche erfindungsgemäße Schneideinsätze angeordnet, wobei der bezüglich einer Bearbeitungsrichtung voranstehende Schneideinsatz mit der für eine Grobbearbeitung ausgebildeten Oberseite als Spanfläche wirkend angeordnet ist und ein bezüglich einer Bearbeitungsrichtung nachstehender Schneideinsatz mit der für eine Feinbearbeitung ausgebildeten Unterseite als Spanfläche wirkend angeordnet ist.

Vorteilhafte Weiterbildungen des Verfahrens ergeben sich durch die Verwendung der erfindungsgemäßen Schneideinsätze in deren Weiterbildungen.

Die Erfindung wird anhand der beiliegenden Zeichnungen näher erläutert. Dabei zeigt:
Fig. 1 eine Darstellung von zwei erfindungsgemäßen Schneideinsätzen mit einem Halter nach einem ersten Ausführungsbeispiel
Fig. 2 die Anordnung von Figur 1 in einer perspektivischen Ansicht
Fig. 3 Schneideinsätze nach einem weiteren Ausführungsbeispiel in der Anordnung mit einem Halter
Figs. 4a-4d Schneideinsätze nach einem weiteren Ausführungsbeispiel in verschiedenen Ansichten
Fig. 5 eine schematische Darstellung eines Schneideinsatzes, wobei die Außenkonturen von Ober- und Unterseite übereinandergelegt sind
Fig. 6a-6b Schneideinsätze nach einem weiteren Ausführungsbeispiel
Fig. 7a-7b Schneideinsätze nach einem weiteren Ausführungsbeispiel
Fig. 8a-8d Schneideinsätze nach einem weiteren Ausführungsbeispiel
Fig. 9a-9d Schneideinsätze nach einem weiteren Ausführungsbeispiel
Fig. 10 Schneideinsätze nach einem weiteren Ausführungsbeispiel in der Anordnung mit einem Halter
Fig. 11 einen Halter nach einem weiteren Ausführungsbeispiel
Fig. 12 einen Halter nach einem weiteren Ausführungsbeispiel

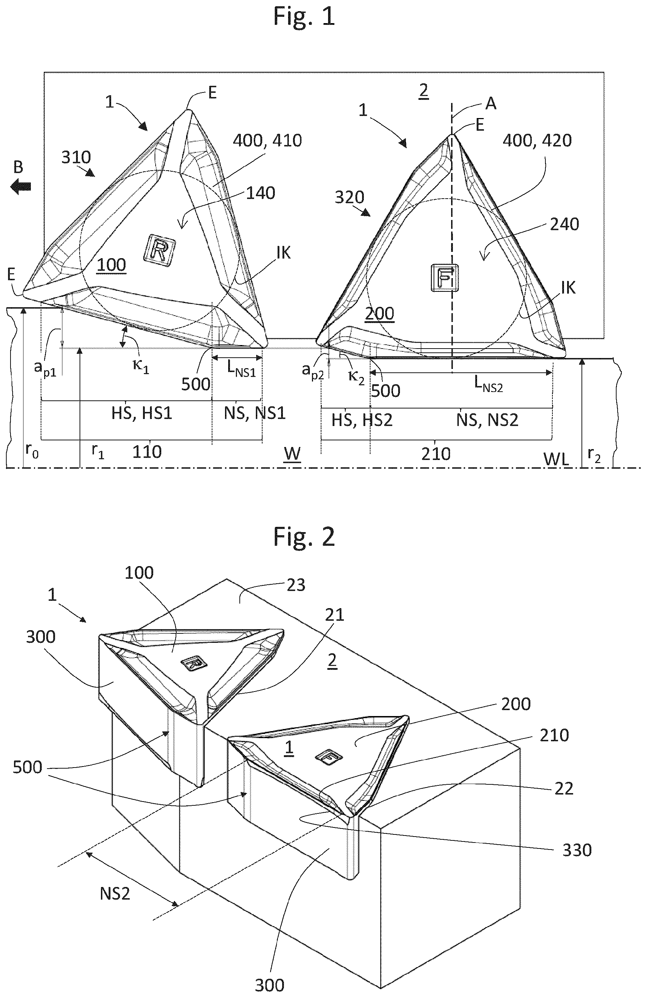

Figur 1 zeigt eine Draufsicht von zwei gleichen erfindungsgemäßen Schneideinsätzen 1 nach einem ersten Ausführungsbeispiel, die an einem Halter 2 festgelegt sind. Details einer Klemmung sind dabei nicht gezeigt.

Angedeutet ist ein rotationssymmetrisches Werkstück W mit einer Werkstücklängsachse WL. Die zwei Schneideinsätze 1 befinden sich in zerspanendem Eingriff mit dem Werkstück W. Beim Schäldrehen rotiert typischerweise das Werkzeug um das Werkstück. Für die Diskussion der Eingriffssituation ist es jedoch unerheblich, ob das Werkzeug oder das Werkstück rotiert. Die Bewegungsrichtung des Werkzeugs ist normal zur Zeichnungsebene und dem Betrachter zugewandt.

Die im Rahmen dieser Anmeldung gezeigten Ausführungsbeispiele sind sogenannte "linke" Schneideinsätze 1, die sich entlang einer Bearbeitungsrichtung B in einer Linksspirale bewegen. Für den unüblichen Fall einer Bewegungsrichtung des Werkzeugs entlang einer Rechtsspirale sind die geometrischen Verhältnisse der Schneideinsätze 1 gespiegelt anzusetzen.

Der Schneideinsatz 1 in der vorliegenden Ausführungsform hat im Wesentlichen dreieckige Grundgestalt.

Zwischen Ecken E des Schneideinsatzes 1 erstrecken sich Seitenkanten 310, 320.

Ein Schneideinsatz 1 nach diesem ersten Ausführungsbeispiel weist nach mathematischer Definition die Form eines geraden Zylinders auf. Das heißt, die Form entsteht durch eine Parallelverschiebung (Extrusion) einer Grundfläche entlang einer normal zur Grundfläche stehenden Geraden. Die Grundfläche und die Deckfläche sind kongruent und parallel. Oberseite 100 und Unterseite 200 sind in diesem Ausführungsbeispiel gleich groß.

Der Schneideinsatz 1 sind doppelseitig, wobei sich die Oberseite 100 von der Unterseite 200 unterscheidet. An der Oberseite 100 und an der Unterseite 200 sind Spanformstrukturen 400, 410, 420 ausgebildet, wobei die Spanformstrukturen 410 an der Oberseite 100 für die Ableitung großer Spanquerschnitte und die Spanformstrukturen 420 an der Unterseite 200 für die Ableitung geringer Spanquerschnitte ausgelegt sind.

Spanformstrukturen 410 an der Oberseite 100 für die Ableitung großer Spanquerschnitte weisen dabei eine größere Tiefe, das heißt Einsenkung in die Oberfläche des Schneideinsatzes und / oder eine größere laterale Erstreckung auf als Spanformstrukturen 420 an der Unterseite 200 für die Ableitung geringer Spanquerschnitte. Insbesondere nehmen die Spanformstrukturen 410 an der Oberseite 100 eine größere Fläche ein als die Spanformstrukturen 420 an der Unterseite 200.

Der bezüglich einer Bearbeitungsrichtung B voranstehende Schneideinsatz 1 ist in der Darstellung links gezeigt. Er übernimmt die Grobbearbeitung, auch Schruppen genannt.

Der bezüglich der Bearbeitungsrichtung B voranstehende Schneideinsatz 1 ist im Halter 2 so angeordnet, dass die Oberseite 100 als Spanfläche wirkt.

Der bezüglich der Bearbeitungsrichtung B nachstehende, für eine Schlichtbearbeitung vorgesehene zweite, in der Darstellung rechts gezeigte Schneideinsatz 1 ist im Halter 2 so angeordnet, dass die Unterseite 200 als Spanfläche wirkt.

In Figur 1 sind also zwei gleiche Schneideinsätze 1 in verschiedener Einbaulage dargestellt.

Der bezüglich der Bearbeitungsrichtung B voranstehende Schneideinsatz 1 tritt mit einer ersten Spantiefe ap₁ in das Werkstück ein und reduziert damit einen ursprünglichen Radius r₀ auf einen ersten Radius r₁.

Die Schneidkanten 110, 210 sind in Schneidenabschnitte gegliedert, nämlich jeweils allgemein in eine Hauptschneide HS und eine Nebenschneide NS. Der Übersichtlichkeit halber wird die allgemeine Kennzeichnung einer Hauptschneide als Bezugszeichen "HS" und einer Nebenschneide als Bezugszeichen "NS" nur in Figur 1 dargestellt, in den weiteren Figuren werden spezifische Bezugszeichen für Haupt- bzw. Nebenschneiden der Oberseite 100 und der Unterseite 200 verwendet. So wird beispielsweise im Folgenden die an der Oberseite 100 ausgebildete Hauptschneide HS als Schrupp-Hauptschneide HS1 bezeichnet.

Eine am Übergang einer Seitenfläche zur Oberseite 100 ausgebildete Schneidkante 110 des voranstehenden Schneideinsatzes 1 ist in Schneidenabschnitte gegliedert und umfasst eine Schrupp-Hauptschneide HS1 und eine gegenüber der Schrupp-Hauptschneide HS1 abgewinkelt verlaufende Schrupp-Nebenschneide NS1.

Die Schrupp-Hauptschneide HS1 übernimmt dabei den überwiegenden Materialabtrag, während die Schrupp-Nebenschneide NS1 die eben erzeugte Oberfläche glättet.

Die Schneidkante 110 weist zwischen der Schrupp-Hauptschneide HS1 und der Schrupp-Nebenschneide NS1 einen hier als Knick ausgebildeten Übergang 500 auf.

Bevorzugt hat die Schrupp-Hauptschneide HS1 einen im Wesentlichen geraden Verlauf. "Im Wesentlichen" bedeutet in diesem Zusammenhang, dass die Schrupp-Hauptschneide HS1 gerade ist oder alternativ gering gekrümmt ist. Gering gekrümmt bedeutet in diesem Zusammenhang, dass die Schrupp-Hauptschneide HS1 einen Krümmungsradius von 100 mm oder mehr aufweist. Bevorzugt ist es jedoch, wenn die Schrupp-Hauptschneide HS1 gerade ist.

Die Schrupp-Nebenschneide NS1 verläuft abgewinkelt zur Schrupp-Hauptschneide HS1.

Insbesondere beträgt ein Außenwinkel zwischen der Schrupp-Hauptschneide HS1 und der Schrupp-Nebenschneide NS1 zwischen 185° und 225°. Besonders bevorzugt beträgt der Außenwinkel 200° ± 10°, also zwischen 190° und 210°, weiter bevorzugt 200° ± 5°. Die Schrupp-Hauptschneide HS1 und Schrupp-Nebenschneide NS1 sind über einen hier als Knick ausgebildeten Übergang 500 miteinander verbunden, wodurch die Schneidkante 110 einen konvexen Verlauf aufweist. Der Übergang 500 ragt über eine gedachte Verbindung von Ecken E hinaus.

Da die Nebenschneide in einer Bearbeitungslage im Wesentlichen parallel zur Werkstückachse WL verläuft, ergibt sich aus dem Winkel zwischen Hauptschneide HS und Nebenschneide NS ein erster Anstellwinkel κ₁ der Schrupp-Hauptschneide HS1. Bei einem Außenwinkel zwischen der Schrupp-Hauptschneide HS1 und der Schrupp-Nebenschneide NS1 von 190° hat der erste Anstellwinkel κ₁ einen Betrag von 10°, ein Außenwinkel von 220° resultiert in einem ersten Anstellwinkel κ₁ von 40°. Besonders bevorzugt beträgt der Anstellwinkel κ₁ der Schrupp-Hauptschneide HS1 15°, was einem Außenwinkel von 195° entspricht.

Es versteht sich, dass wegen der Anstellung des vorderen Schneideinsatzes 1 die Länge der Schrupp-Hauptschneide HS1 durch die Projektion in der darunter eingezeichneten schematischen Bemaßung verkürzt abgebildet ist, während die Länge L_{NS1} der parallel zur Werkstücklängsachse WL verlaufende Schrupp-Nebenschneide NS1 (dargestellt über den Maßpfeil "L_{NS1}") längentreu abgebildet ist.

Die Schrupp-Nebenschneide NS1 kann - wie hier gezeigt - als Geradenabschnitt, polygonal in Form mehrerer Geradenabschnitte, als Teil einer Kreiskurve, allgemein gekrümmt oder, insbesondere bevorzugt in Form eines Ellipsenabschnitts ausgebildet sein. Ein gekrümmter Verlauf der Schrupp-Nebenschneide NS1 lässt vorteilhaft eine Variation des ersten Anstellwinkels κ₁ zu. Besonders vorteilhaft ist hierbei ein elliptischer Verlauf der Schrupp-Nebenschneide NS1.

Hat die Nebenschneide einen elliptisch gekrümmten Verlauf, fällt bevorzugt ein Scheitelpunkt einer die Kontur der Schrupp-Nebenschneide NS1 bildenden Ellipse mit dem Übergang 500 zusammen. Insbesondere ist am Übergang 500 eine Krümmung der Schrupp-Hauptschneide HS1 gleich einer Krümmung der Schrupp-Nebenschneide NS1, sprich, dass die Schneidenabschnitte stetig ineinander übergehen.

Sind die Schrupp-Hauptschneide HS1 und die Schrupp-Nebenschneide NS1 wie im vorliegenden Ausführungsbeispiel von Geradenabschnitten gebildet, ergibt sich der abgewinkelte Verlauf der beiden Schneidenabschnitte unmittelbar aus dem Winkel der Geradenabschnitte zueinander. Bei einem gekrümmten Verlauf kann der abgewinkelte Verlauf der beiden Schneidenabschnitte über Tangenten an die jeweiligen Schneidenabschnitte im Bereich des Übergangs 500 bestimmt werden.

Die Schrupp-Hauptschneide HS1 ist deutlich länger als die Schrupp-Nebenschneide NS1, bevorzugt wenigstens doppelt so lang. Insbesondere beträgt ein Verhältnis der Länge der Schrupp-Hauptschneide HS1 zur Länge der Schrupp-Nebenschneide NS1 zwischen 3 und 6, insbesondere vier. Als Bruch ausgedrückt, verhalten sich die Längen von Schrupp-Hauptschneide HS1 und Schrupp-Nebenschneide NS1 zu: 2 ≤ HS1/NS1 ≤ 6, bevorzugt 3 ≤ HS1/NS1 ≤ 5.

Die bevorzugte Ausdehnung der Hauptschneide an der Oberseite 100 und die Länge der Nebenschneide an der Unterseite kann auch über ein Verhältnis zu einer Länge der Seitenkante 310 bzw. der Seitenkante 320 angegeben werden. So beträgt das Verhältnis der Länge der Schrupp-Hauptschneide HS1 zur Länge der Seitenkante 310 für dreieckige Schneideinsätze 1 bevorzugt zwischen 0,60 und 0,90, weiter bevorzugt zwischen 0,70 und 0,85. Dies reflektiert die günstige Ausnutzung der Seitenkantenabmessungen in verfügbare Schneidenlänge. Die gleichen Verhältnisse gelten für die Schlicht-Nebenschneide NS2 in Relation zur Länge der Seitenkante 320.

Der Übergang 500 von Haupt- in Nebenschneide liegt außermittig, und zwar hinsichtlich der Erstreckung der Seitenkante 310 an dem der Bearbeitungsrichtung B abgewandten, hinteren Abschnitt der Seitenkante 310. Anders ausgedrückt liegt der Übergang 500 an der Oberseite 100 in einem Abschnitt rechts von der Mitte der Seitenkante 310. An der Unterseite 200 liegt der Übergang entsprechend außermittig in einem der Bearbeitungsrichtung B zugewandten vorderen Abschnitt der Seitenkante 320.

Durch die asymmetrische Gliederung der Seitenkanten 310, 320 in eine auf der Oberseite 100 lange Schrupp-Hauptschneide HS1 und kurze Schrupp-Nebenschneide NS1 und auf der Unterseite 200 in eine lange Schlicht-Nebenschneide NS2 und eine kurze Schlicht-Hauptschneide HS2 wird eine besonders hohe Materialausnutzung des Schneideinsatzes 1 erreicht. Setzt man die Länge der Schrupp-Hauptschneide HS1 in ein Verhältnis zu einem Durchmesser des Inkreises IK, so ergibt sich vorliegend ein Verhältnis von rund 1, sprich die Schrupp-Hauptschneide HS1 ist gleich lang wie der Durchmesser des Inkreises IK beträgt. Bei Schneideinsätzen mit dreieckiger Grundgestalt beträgt das Verhältnis von Länge der Schrupp-Hauptschneide HS1 zum Durchmesser des Inkreises IK insbesondere zwischen 1,25 bis 0,75. Weiter bevorzugt beträgt das Verhältnis der Länge der Schrupp-Hauptschneide HS1 zum Durchmesser des Inkreises IK zwischen 1,15 und 0,95. Gleiches gilt für das Verhältnis der Länge L_{NS2} der Schlicht-Nebenschneide NS2 zum Durchmesser des Inkreises IK.

Bei einem symmetrischen Schneidkantenverlauf mit einem bezüglich der Seitenkante mittig ausgebildeten Übergang wäre eine Länge der Hauptschneide an der Oberseite auf Kosten der Nebenschneide in ihrer Länge deutlich reduziert.

An der Unterseite 200 befindet sich der Übergang 500 von Haupt- in Nebenschneide an einem vorderen, der Bearbeitungsrichtung B zugewandten Abschnitt der Seitenkante 320.

Diese Angaben bezüglich der Lage des Übergangs 500 gelten für die gezeigte Bearbeitungsrichtung B und Bewegungsrichtung des Werkzeugs entlang einer Linksspirale.

Der bezüglich der Bearbeitungsrichtung B nachstehende, für eine Schlichtbearbeitung vorgesehene Schneideinsatz 1 ist der gleiche Schneideinsatz 1 wie der voranstehende, ist aber umgedreht, das heißt im Halter 2 so angeordnet, dass die Unterseite 200 des Schneideinsatzes 1 als Spanfläche wirkt.

Dementsprechend umgekehrt gilt für die Längenverhältnisse der Haupt- und Nebenschneiden an der Unterseite 200: die Schlicht-Nebenschneide NS2 ist deutlich länger als die Schlicht-Hauptschneide HS2. Es gilt : 2 ≤ NS2/HS2 ≤ 6, bevorzugt 3 ≤ NS2/HS2 ≤ 5.

Es versteht sich, dass wegen der Anstellung der Schlicht-Hauptschneide HS2 durch die Projektion verkürzt abgebildet ist, während die Länge L_{NS2} der Schlicht-Nebenschneide NS2 (dargestellt über den Maßpfeil "L_{NS2}") längentreu abgebildet ist.

Für den hier vorliegenden Fall eines prismatischen Schneideinsatzes 1 mit gleich großen Inkreisen an Oberseite 100 und Unterseite 200 ist die Länge der Schrupp-Hauptschneide HS1 an der Oberseite 100 gleich der Länge der Schlicht-Nebenschneide NS2 an der Unterseite 200.

So steht für die Feinbearbeitung mit der als Spanfläche wirkenden Unterseite 200 eine besonders günstig glättende lange Schlicht-Nebenschneide NS2 zu Verfügung.

Wie eingangs erläutert, ist bei dem Schneideinsatz 1 nach diesem Ausführungsbeispiel eine Draufsicht auf eine Oberseite 100 nicht kongruent mit einer Draufsicht auf eine Unterseite 200. In anderen Worten kann eine Außenkontur der Oberseite 100 nicht in Deckung gebracht werden mit einer Außenkontur der Unterseite 200. Die Inkongruenz ist in diesem Ausführungsbeispiel von der asymmetrischen Gliederung der Seitenkanten durch ungleich lange Haupt- und Nebenschneiden bewirkt.

Die Asymmetrie ist im vorliegenden Ausführungsbeispiel einer im Wesentlichen dreieckigen Grundgestalt unmittelbar auch anhand der hilfsweise eingetragenen Spiegelachse A ersichtlich: die Konturen des Schneideinsatzes 1 links und rechts der Spiegelachse A sind verschieden. Alternativ könnte die Asymmetrie auch so definiert oder festgestellt werden, dass entlang einer Seitenkante 310, 320 keine die Seitenkante 310, 320 schneidende Achse existiert, entlang derer eine Spiegelung einen jenseits der Achse gelegenen Abschnitt der Seitenkante 310, 320 in den diesseits der Achse gelegenen Abschnitt überführt.

Ebenfalls ersichtlich aus der Darstellung nach Figur 1 ist, dass bei einer Ausgestaltung der Plattensitze im Halter 2 entsprechend der Kontur des Schneideinsatzes 1, ein bezüglich der Bearbeitungsrichtung B vorderer Plattensitz nur ein Einsetzen des Schneideinsatzes 1 in richtiger Lage mit der Oberseite 100 nach oben und damit als Spanfläche wirkend erlaubt und ein bezüglich der Bearbeitungsrichtung B hinterer Plattensitz nur ein Einsetzen des Schneideinsatzes 1 in richtiger Lage mit der Unterseite 200 nach oben und damit als Spanfläche wirkend erlaubt.

In anderen Worten gestattet ermöglicht die Asymmetrie des Schneideinsatzes 1 eine konturangepasste geometrische "Codierung" der Plattensitze.

Die asymmetrische Ausgestaltung des Schneideinsatzes 1 hat weiters zur Folge, dass jener Abschnitt der Seitenkante 310, der an der Oberseite 100 als Schrupp-Hauptschneide HS1 ausgebildet ist, an der Unterseite 200 als Schlicht-Nebenschneide NS2 an der Seitenkante 320 der Unterseite 200 vorliegt. Somit steht an der für die Feinbearbeitung vorgesehenen Unterseite 200 des Schneideinsatzes 1 eine besonders lange Nebenschneide zur Glättung der Werkstückoberfläche zur Verfügung.

Gleichermaßen in Folge entspricht jener Abschnitt der Seitenkante 310 der Oberseite 100, der an der Oberseite 100 als Schrupp-Nebenschneide NS1 ausgebildet ist, an der Unterseite 200 einer Schlicht-Hauptschneide HS2.

Somit steht an der für die Feinbearbeitung vorgesehenen Unterseite 200 des Schneideinsatzes 1 eine an den geringen Materialabtrag der Feinbearbeitung angepasste relativ kurze Hauptschneide zur Verfügung.

Konkret ist die Schlicht-Hauptschneide HS2 mit einer zweiten Spantiefe ap₂ im Eingriff mit dem Werkstück W und reduziert damit den ersten Radius r₁ auf einen zweiten Radius r₂. Die Schlicht-Nebenschneide NS2 übernimmt die Glättung der Werkstückoberfläche.

Die Schlicht-Nebenschneide NS2 ist parallel zur Werkstückoberfläche ausgerichtet. Damit ergibt sich aus dem Verlauf der Schlicht-Hauptschneide HS2 zur Schlicht-Nebenschneide NS2 ein zweiter Anstellwinkel κ2 der Schlicht-Hauptschneide HS2.

An der Oberseite 100 und an der Unterseite 200 sind abschnittsweise eine plane Auflagefläche 140, 240 zur Auflage des Schneideinsatzes 1 in einem Plattensitz ausgebildet. Eine plane Auflagefläche 140 an der Oberseite 100 ist sichtlich kleiner als die plane Auflagefläche 240 an der Unterseite 200. Die Unterseite 200 weist damit vorteilhaft eine größere plane Auflagefläche 240 auf als die Oberseite 100. Der Schneideinsatz 1 erfährt dadurch in der Ausrichtung mit der Oberseite 100 als Spanfläche eine besonders gute Abstützung.

Unter der planen Auflagefläche 140, 240 sind jene Areale der Oberflächen gemeint, welche frei sind von Spanformstrukturen 400.

Figur 2 zeigt die Anordnung aus Schneideinsätzen 1 und Halter 2 gemäß Figur 1 in einer perspektivischen Ansicht.

Der hier als Knick ausgebildete Übergang 500 zwischen Hauptschneiden (HS1, HS2) und Nebenschneiden (NS1, NS2) erstreckt sich über die Seitenflächen 300.

Entlang der Schlicht-Nebenschneide NS2 ist bevorzugt und wie vorliegend ausgeführt eine Stützfase 330 ausgebildet. Eine Stützfase ist im Unterschied zu üblichen Fasen an einer Schneidkante eine Fase, die freiflächenseitig an der Seitenfläche 300 ausgebildet ist. Eine Stützfase 330 verbessert die Stabilität einer Schneidkante, hier der Schlicht-Nebenschneide NS2, indem sie die Belastung bei der Zerspanung auf eine größere Fläche verteilt. Dies reduziert die Gefahr von Ausbrüchen und verlängert die Lebensdauer des Schneideinsatzes 1. Durch die größere Kontaktfläche kann zudem Wärme besser abgeleitet werden, was die thermische Belastung der Schneidkante verringert und somit die Standzeit des Schneideinsatzes 1erhöht. Ferner hilft die Stützfase 330, Vibrationen während des Schneidprozesses zu minimieren. Dies führt zu einer besseren Oberflächenqualität des bearbeiteten Werkstücks W und einer höheren Präzision.

Die Stützfase 330 weist bevorzugt einen Stützfasenwinkel zwischen 3° bis 8° auf.

Bevorzugt bestehen an den auf der Oberseite 100 ausgebildeten Schneidkanten keine Stützfasen.

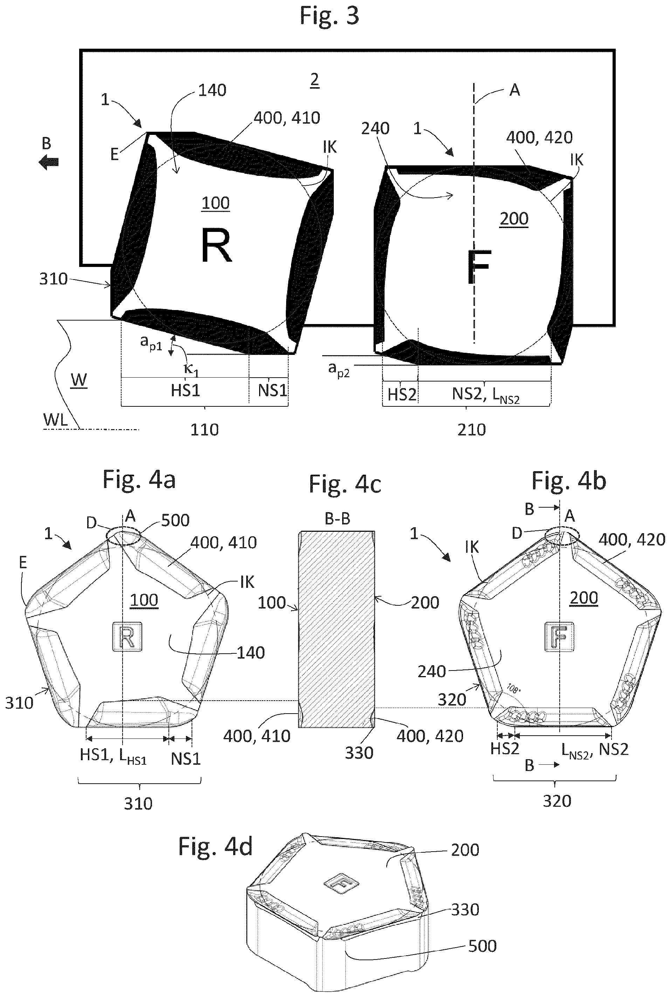

Figur 3 zeigt erfindungsgemäße Schneideinsätze 1 nach einem zweiten Ausführungsbeispiel, hier in der Anordnung mit einem Halter 2. Die Schneideinsätze 1 nach dem vorliegenden Ausführungsbeispiel weisen eine im Wesentlichen quadratische Grundgestalt auf.

Am Halter 2 sind zwei gleiche erfindungsgemäße Schneideinsätze 1 angeordnet, wobei der bezüglich der Bearbeitungsrichtung B voranstehende, hier links abgebildete Schneideinsatz 1 mit seiner Oberseite 100 nach oben festgelegt ist. Die Oberseite 100 fungiert daher beim voranstehenden Schneideinsatz 1 als Spanfläche. Der bezüglich der Bearbeitungsrichtung B hintere Schneideinsatz 1 ist mit der Unterseite 200 nach oben weisend montiert. Die Unterseite 200 ist daher beim hinteren Schneideinsatz 1 die Spanfläche.

Die Spanformstrukturen 400 sind nur schematisch angedeutet. Die Spanformstrukturen 410 an der Oberseite 100 sind für die Ableitung großer Spanquerschnitte und die Spanformstrukturen 420 an der Unterseite 200 für die Ableitung geringer Spanquerschnitte ausgelegt.

Bevorzugt und im gezeigten Ausführungsbeispiel ausgeführt, nehmen die Spanformstrukturen 410 an der Oberseite 100 eine größere Fläche ein als die Spanformstrukturen 420 an der Unterseite 200. Damit steht an der Unterseite 200 eine größere plane Auflagefläche zur Abstützung der Bearbeitungskräfte beim Einsatz des Schneideinsatzes 1 zur Grobzerspanung zur Verfügung.

Wieder gilt, dass die an der Oberseite 100 ausgebildete Schneidkante 110 gegliedert ist in eine Schrupp-Hauptschneide HS1 und eine gegenüber der Schrupp-Hauptschneide HS1 abgewinkelt verlaufende Schrupp-Nebenschneide NS1. Die an der Unterseite 200 ausgebildete Schneidkante 210 ist gegliedert in eine Schlicht-Hauptschneide HS2 und eine Schlicht-Nebenschneide NS2.

Die Schrupp-Hauptschneide HS1 und die Schrupp-Nebenschneide NS1 verlaufen abgewinkelt zueinander mit einem Außenwinkel von hier 195°, was bei einer Ausrichtung der Schrupp-Nebenschneide NS1 parallel zur Werkstücklängsachse WL zu einem ersten Anstellwinkel κ₁ der Schrupp-Hauptschneide HS1 von 15° führt.

Die Längenverhältnisse der jeweiligen Haupt- und Nebenschneiden an der Oberseite 100 sind wie beim ersten Ausführungsbeispiel beschrieben. Die Schrupp-Hauptschneide HS1 ist deutlich länger als die Schrupp-Nebenschneide NS1, bevorzugt wenigstens doppelt so lang. Insbesondere beträgt ein Verhältnis der Länge der Schrupp-Hauptschneide HS1 zur Länge der Schrupp-Nebenschneide NS1 zwischen 3 und 6, insbesondere vier. Als Bruch ausgedrückt, verhalten sich die Längen von Schrupp-Hauptschneide HS1 und Schrupp-Nebenschneide NS1 zu: 2 ≤ HS1/NS1 ≤ 6, bevorzugt 3 ≤ HS1/NS1 ≤ 5.

Dementsprechend umgekehrt gilt für die Längenverhältnisse der Haupt- und Nebenschneiden an der Unterseite 200: die Schlicht-Nebenschneide NS2 ist deutlich länger als die Schlicht-Hauptschneide HS2. Es gilt : 2 ≤ NS2/HS2 ≤ 6, bevorzugt 3 ≤ NS2/HS2 ≤ 5.

Die Asymmetrie des Schneideinsatzes 1 ist durch die hilfsweise eingetragene Spiegelachse A verdeutlicht. Sichtlich unterscheiden sich die Konturen des Schneideinsatzes 1 links und rechts der Spiegelachse A. Eine Kontur einer Oberseite 100 ist inkongruent zur Kontur einer Unterseite 200.

Durch die asymmetrische Gliederung der Seitenkanten in ungleich lange Haupt- und Nebenschneiden wird eine besonders günstige Materialausnutzung des Schneideinsatzes erreicht. Es steht bei einem vorgegebenen Inkreis-Durchmesser eine größere Schneidenlänge der Schrupp-Hauptschneide HS1 bzw. der Schlicht-Nebenschneide NS2 zur Verfügung als bei einer symmetrischen Ausgestaltung der Seitenkanten mit gleich langen Haupt- und Nebenschneiden. Bevorzugt liegt das Verhältnis der Länge L_{NS2} der Schlicht-Nebenschneide NS2 zum Durchmesser des Inkreises IK für quadratische Schneideinsätze zwischen 0,50 und 0,80. Vorliegend beträgt das Verhältnis der Länge L_{NS2} der Schlicht-Nebenschneide NS2 zum Durchmesser des Inkreises IK rund 0,70 - das heißt, dass die Länge L_{NS2} der Schlicht-Nebenschneide NS2 70% des Inkreisdurchmessers beträgt. Die gleichen Verhältnisse gelten für die Relation der der Schrupp-Hauptschneide HS1 zum Inkreisdurchmesser der Oberseite 100.

Die Ausdehnung der Hauptschneide an der Oberseite 100 und die Länge der Nebenschneide an der Unterseite kann auch über ein Verhältnis der betreffenden Schneidenabschnitte zu einer Länge der Seitenkante 310 bzw. der Seitenkante 320 angegeben werden. So beträgt das Verhältnis der Länge der Schrupp-Hauptschneide HS1 zur Länge der Seitenkante 310 für quadratische Schneideinsätze 1 bevorzugt zwischen 0,60 und 0,90. Dies reflektiert die günstige Ausnutzung der Seitenkantenabmessungen in verfügbare Schneidenlänge. Die gleichen Verhältnisse gelten für die Schlicht-Nebenschneide NS2 in Relation zur Länge der Seitenkante 320.

Wie bereits für das erste Ausführungsbeispiel erläutert, schafft die Asymmetrie des Schneideinsatzes 1 die Möglichkeit einer verwechslungssicheren Ausgestaltung der Plattensitze im Halter 2.

Die Figuren 4a bis 4d zeigen einen Schneideinsatz 1 nach einem weiteren Ausführungsbeispiel in verschiedenen Ansichten.

Der Schneideinsatz 1 nach diesem Ausführungsbeispiel weist eine 5-eckige Grundgestalt auf. Oberseite 100 und Unterseite 200 sind hier gleich groß, das heißt die jeweiligen Inkreise IK haben den gleichen Durchmesser.

Figur 4a zeigt den Schneideinsatz 1 in einer Draufsicht auf die Oberseite 100, welche Oberseite 100 mit Spanformstrukturen 400, 410 zur Grobbearbeitung versehen ist.

Figur 4b zeigt den Schneideinsatz 1 in einer Draufsicht auf die Unterseite 200, welche Unterseite 200 mit Spanformstrukturen 400, 420 zur Feinbearbeitung versehen ist.

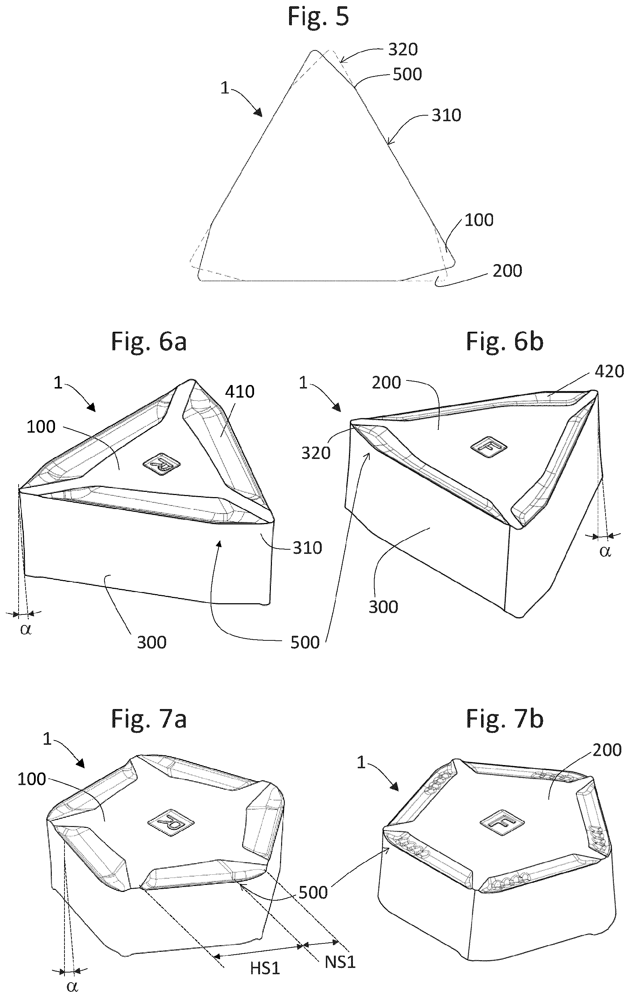

Figur 4c zeigt den Schnitt B-B entlang der in Figur 5 eingetragenen Schnittebene B-B.

Figur 4d zeigt den Schneideinsatz 1 in einer perspektivischen Ansicht.

Die Asymmetrie des Schneideinsatzes 1 ist durch die hilfsweise eingetragene Spiegelachse A und die zur Hervorhebung eingetragenen Details "D" besonders gut ersichtlich.

Man erkennt in Figuren 4a und 4b, dass der als Knick 500 ausgebildete Übergang einer Hauptschneide in eine Nebenschneide außermittig bezüglich der Erstreckung einer Seitenkante 310, 320 liegt. Somit ist die Kontur des Schneideinsatzes 1 asymmetrisch insofern, als bei einer Spiegelung um eine Spiegelachse A die Konturen links und rechts der Spiegelachse A unterschiedlich sind.

Ferner ersichtlich ist es, dass die Spanformstrukturen 400, 410 an der Oberseite 100 sich weiter in Richtung einer Plattenmitte erstrecken als Spanformstrukturen 400, 420 an der Unterseite 200. Dies ist auch im Schnitt nach Figur 4c ersichtlich.

An der Oberseite 100 und an der Unterseite 200 sind abschnittsweise eine plane Auflagefläche 140, 240 zur Auflage des Schneideinsatzes 1 in einem Plattensitz ausgebildet. Eine plane Auflagefläche 140 an der Oberseite 100 ist kleiner als die plane Auflagefläche 240 an der Unterseite 200. Die Unterseite 200 weist vorteilhaft eine größere plane Auflagefläche 240 auf als die Oberseite 100. Unter der planen Auflagefläche 140, 240 sind jene Areale der Oberflächen gemeint, welche frei sind von Spanformstrukturen 400.

Wie bereits für die vorherigen Ausführungsbeispiele ausgeführt, ist die zur Oberseite 100 weisende Schneidkante 110 gegliedert in eine Schrupp-Hauptschneide HS1 und eine gegenüber der Schrupp-Hauptschneide HS1 abgewinkelt verlaufende Schrupp-Nebenschneide NS1.

Die zur Unterseite 200 weisende Schneidkante 210 ist gegliedert in eine Schlicht-Hauptschneide HS2 und eine Schlicht-Nebenschneide NS2.

Die Längenverhältnisse der jeweiligen Haupt- und Nebenschneiden an der Oberseite 100 und der Unterseite 200 sind wie bei den vorherigen Ausführungsbeispielen beschrieben.

Ferner lässt sich die bevorzugt lange Erstreckung der Hauptschneiden an der Oberseite 100 und der Nebenschneide an der Unterseite 200 auch durch das Verhältnis zum Durchmesser des Inkreises IK angeben. So liegt für einen fünfeckigen Schneideinsatz 1 das Verhältnis der Länge L_{HS1} der Schrupp-Hauptschneide HS1 zum Durchmesser des Inkreises IK bevorzugt zwischen 0,50 und 0,80. Die gleichen Verhältnisse gelten für die Relation der Schlicht-Nebenschneide NS2 zum Durchmesser des Inkreises IK.

Bezogen auf die Länge der Seitenkante 310 beträgt das Verhältnis der Länge L_{HS1} der Schrupp-Hauptschneide HS1 0,60 und 0,90. Das heißt die Länge L_{HS1} der Schrupp-Hauptschneide HS1 beträgt bevorzugt zwischen 60% und 90% der Seitenkante 310.

Das gleiche Verhältnis gilt an der Unterseite 200 für die Erstreckung der Schlicht-Nebenschneide NS2 in Relation zur Seitenkante 320.

An der Schneidkante der Unterseite 200 und dort insbesondere an der Schlicht-Nebenschneide NS2 ist eine Stützfase 330 ausgebildet.

Figur 5 zeigt schematisch die übereinandergelegten Außenkonturen eines Schneideinsatzes 1 aus einer Draufsicht auf die Oberseite 100 und einer Draufsicht auf die Unterseite 200. Es sind also zwei Draufsichten desselben Schneideinsatzes 1 dargestellt: die Draufsicht auf die Oberseite 100 und die Draufsicht auf die Unterseite 200. Die Figur 5 illustriert die Asymmetrie am Beispiel eines Schneideinsatzes 1 mit dreieckiger Grundgestalt.

Dabei ist zur Verdeutlichung der abweichenden Außenkonturen der Verlauf der Außenkontur der Oberseite 100 als durchgezogene Linie dargestellt und der Verlauf der Außenkontur der Unterseite 200 als strichlierte Linie dargestellt.

Ersichtlich ist die Außenkontur der Oberseite 100 verschieden von der Außenkontur der Unterseite 200. Eine Draufsicht auf die Oberseite 100 ist inkongruent zu einer Draufsicht auf die Unterseite 200. Die jeweiligen Außenkonturen lassen sich nicht in Deckung bringen. Die Inkreise von Oberseite 100 und Unterseite 200 sind hier gleich groß. Die Inkongruenz der Außenkonturen ist also hier nicht durch unterschiedliche Größen der Außenkonturen von Oberseite 100 und Unterseite 200 gegeben, sonders wird durch die im geometrischen Sinne unähnliche Gestalt der Außenkonturen von Oberseite 100 und Unterseite 200 bewirkt.

Die Inkongruenz der Außenkonturen von Oberseite 100 und Unterseite 200 darin besteht im vorliegenden Ausführungsbeispiel des Schneideinsatzes 1 darin, dass die Seitenkanten 310, 320 einen bezüglich ihrer Erstreckung asymmetrischen Verlauf aufweisen. Wie bereits zuvor erläutert, sind die Seitenkanten 310, 320 in abgewinkelt zueinander verlaufende Schneidenabschnitte gegliedert, wobei der Übergang 500 bezüglich der Erstreckung der Seitenkanten 310, 320 außermittig liegt. Somit ist der Verlauf der Seitenkanten 310, 320 im Sinne der Anmeldung asymmetrisch und auch die Außenkontur des Schneideinsatzes 1 ist asymmetrisch.

Figuren 6a und 6b zeigen Ansichten eines Schneideinsatzes 1 mit dreieckiger Grundgestalt nach einem Ausführungsbeispiel, bei welchem eine Inkongruenz der Außenkonturen von Oberseite 100 und Unterseite 200 neben dem asymmetrischen Verlauf der Seitenkanten auch darin besteht, dass Oberseite 100 und Unterseite 200 unterschiedlich große Inkreise aufweisen. Figur 6a zeigt eine perspektivische Ansicht des Schneideinsatzes 1 mit einer Betrachtungsrichtung liegenden und damit sichtbaren Oberseite 100, nach Figur 6b ist der Schneideinsatz 1 umgedreht und die Unterseite 200 weist nach oben und ist sichtbar. Oberseite 100 und Unterseite 200 sind ungleich groß. Somit sind Außenkonturen der Oberseite 100 und der Unterseite 200 ungleich groß und damit inkongruent.

Darüber hinaus sind die Außenkonturen der Oberseite 100 und der Unterseite 200 auch im geometrischen Sinne unähnlich, siehe dazu die Lage des Übergangs 500 zwischen Haupt- und Nebenschneide. Der Übergang 500 liegt außermittig bezüglich der Erstreckung einer Seitenkante 310, 320.

Wegen der unterschiedlichen Größe von Oberseite 100 und Unterseite 200 verlaufen die Seitenflächen 300 in einem Winkel ungleich 90° zu den Oberflächen von Oberseite 100 und Unterseite 200. Der Schneideinsatz 1 hat somit eine konische Gestalt in einer Seitenansicht.

Im vorliegenden Beispiel ist die Oberseite 100, welche Spanformstrukturen 410 für eine Grobbearbeitung aufweist, größer als die Unterseite 200, welche Spanformstrukturen 420 für eine Feinbearbeitung aufweist. Der Schneideinsatz 1 verjüngt sich daher von der Oberseite 100 in Richtung der Unterseite 200. Ein Neigungswinkel α der Seitenflächen 300 ist schematisch und nicht zwingend winkeltreu eingezeichnet. Der Neigungswinkel α der Seitenflächen 300 beträgt bevorzugt wenige Grad, insbesondere zwischen 0,1° und 10°, weiter bevorzugt zwischen 0,5° und 5°.

Der Schneideinsatz 1 kann auch so ausgebildet sein, dass die Oberseite 100 einen kleineren Inkreis aufweist als die Unterseite 200.

Ein Schneideinsatz 1 dieser Ausprägung mit sich verjüngender Gestalt erlaubt eine Ausbildung eines Halters (hier nicht dargestellt) derart, dass der Schneideinsatz 1 nur in der korrekten Ausrichtung bezüglich der Oberflächen Oberseite 100 und Unterseite 200 eingesetzt werden kann.

Für sich verjüngende Schneideinsätze 1 können Plattensitze an einem Halter neben der Anpassung an die Außenkontur zusätzlich so ausgebildet sein, dass seitliche Anlageflächen des Plattensitzes entsprechend der Neigung der Seitenflächen 300 des Schneideinsatzes 1 verlaufen. Damit wird ein zusätzlicher Formschluss zwischen Schneideinsatz und Plattensitz erzielt.

Figuren 7a und 7b zeigen Ansichten eines Schneideinsatzes 1 mit fünfeckiger Grundgestalt nach einem weiteren Ausführungsbeispiel analog zu dem in Figuren 6a und 6b, bei welchem eine Inkongruenz der Außenkonturen von Oberseite 100 und Unterseite 200 neben dem asymmetrischen Verlauf der Seitenkanten auch darin besteht, dass Oberseite 100 und Unterseite 200 unterschiedlich große Inkreise aufweisen. Figur 7a zeigt eine perspektivische Ansicht des Schneideinsatzes 1 mit einer Betrachtungsrichtung liegenden und damit sichtbaren Oberseite 100, nach Figur 7b ist der Schneideinsatz 1 umgedreht und die Unterseite 200 weist nach oben und ist sichtbar. Oberseite 100 und Unterseite 200 sind ungleich groß. Somit sind Außenkonturen der Oberseite 100 und der Unterseite 200 ungleich groß und damit inkongruent.

Zudem besteht eine Inkongruenz der Außenkonturen der Oberseite 100 und der Unterseite 200 auch darin, als diese im geometrischen Sinne unähnlich sind, siehe dazu die Lage des Übergangs 500 zwischen Haupt- und Nebenschneide.

Des weiteren gelten die gleichen Vorteile und Möglichkeiten der näheren Ausgestaltung wie für das vorige Ausführungsbeispiel beschrieben.

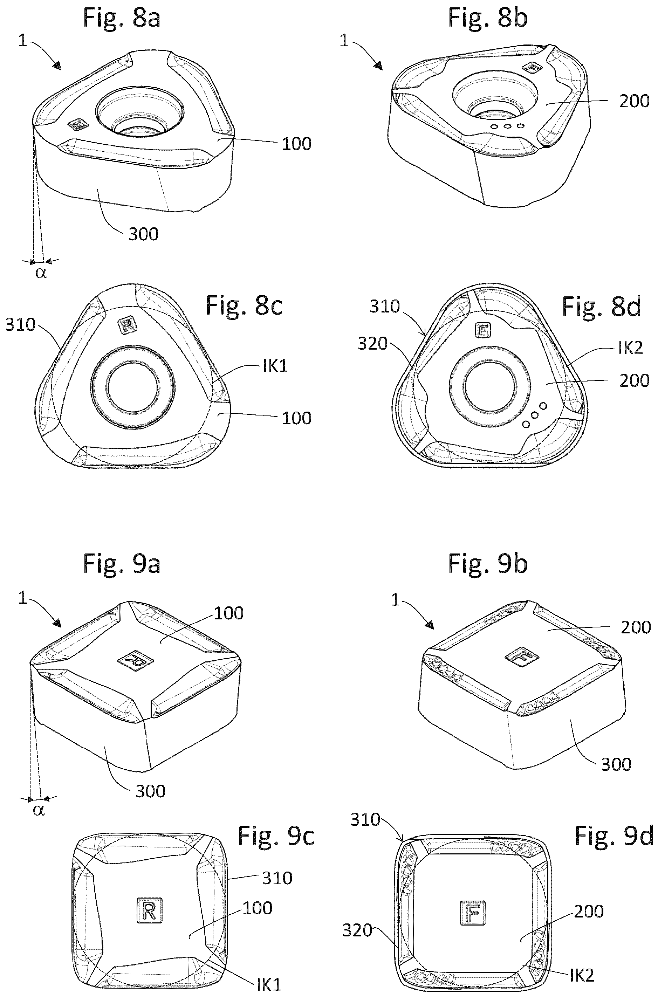

Figuren 8a bis 8d zeigen Ansichten eines Schneideinsatzes 1 mit verrundet dreieckiger Grundgestalt nach einem weiteren Ausführungsbeispiel, bei welchem eine Inkongruenz der Außenkonturen von Oberseite 100 und Unterseite 200 darin besteht, dass Oberseite 100 und Unterseite 200 unterschiedlich große Inkreise aufweisen. Figur 8a zeigt eine perspektivische Ansicht des Schneideinsatzes 1 mit einer Betrachtungsrichtung liegenden und damit sichtbaren Oberseite 100, nach Figur 8b ist der Schneideinsatz 1 umgedreht und die Unterseite 200 weist nach oben und ist sichtbar. Oberseite 100 und Unterseite 200 sind ungleich groß. Somit sind Außenkonturen der Oberseite 100 und der Unterseite 200 ungleich groß und damit inkongruent.

Der Schneideinsatz 1 verjüngt sich von der Oberseite 100 in Richtung der Unterseite 200. Ein Neigungswinkel α der Seitenflächen 300 ist schematisch und nicht zwingend winkeltreu eingezeichnet. Der Neigungswinkel α der Seitenflächen 300 beträgt bevorzugt wenige Grad, insbesondere zwischen 0,1° und 10°, weiter bevorzugt zwischen 0,5° und 5°.

Vorliegend ist also ein Inkreis IK1 des Schneideinsatzes 1 an der Oberfläche 100 größer als ein Inkreis IK2 der Unterseite 200. Dies ist gut im Vergleich der Figuren 8c und 8d entnehmbar. In der Draufsicht auf die Unterseite 200 nach Figur 8d ist die Seitenkante 310 der Oberseite 100 sichtbar.

Es kann auch der umgekehrte Fall vorgesehen sein mit einer Unterseite 200 größer als die Oberseite 100.

Der in Figuren 8a bis 8d gezeigte Schneideinsatz 1 ist bezüglich der Außenkonturen von Ober- und Unterseite symmetrisch, wie es insbesondere den Draufsichten in Figur 8c und Figur 8d hervorgeht. Anders ausgedrückt, sind hier die Außenkonturen im geometrischen Sinne ähnlich.

Figuren 9a bis 9d zeigen Ansichten eines Schneideinsatzes 1 mit verrundet quadratischer Grundgestalt nach einem weiteren Ausführungsbeispiel, bei welchem eine Inkongruenz der Außenkonturen von Oberseite 100 und Unterseite 200 darin besteht, dass Oberseite 100 und Unterseite 200 unterschiedlich große Inkreise aufweisen. Figur 9a zeigt eine perspektivische Ansicht des Schneideinsatzes 1 mit einer Betrachtungsrichtung liegenden und damit sichtbaren Oberseite 100, nach Figur 9b ist der Schneideinsatz 1 umgedreht und die Unterseite 200 weist nach oben und ist sichtbar. Oberseite 100 und Unterseite 200 sind ungleich groß. In Figur 9c und Figur 9d sind die Inkreise IK der Oberseite 100, Inkreis IK1 und der Unterseite 200, Inkreis IK2, eingetragen, wobei im vorliegenden Fall gilt: IK1 > IK2. Somit sind Außenkonturen der Oberseite 100 und der Unterseite 200 ungleich groß und damit inkongruent. Vorliegend ist also ein Inkreis IK1 des Schneideinsatzes 1 an der Oberfläche 100 größer als ein Inkreis IK2 der Unterseite 200. Es kann auch der umgekehrte Fall vorgesehen sein mit einer Unterseite 200 größer als die Oberseite 100. In der Draufsicht auf die Unterseite 200 nach Figur 9d ist wegen der sich zur Unterseite 200 hin verjüngenden Gestalt des Schneideinsatzes 1 die Seitenkante 310 der Oberseite 100 erkennbar.

Der in Figuren 9a bis 9d gezeigte Schneideinsatz 1 ist bezüglich der Außenkonturen von Ober- und Unterseite symmetrisch, wie es insbesondere den Draufsichten in Figur 9c und Figur 9d hervorgeht. Anders ausgedrückt, sind hier die Außenkonturen im geometrischen Sinne ähnlich.

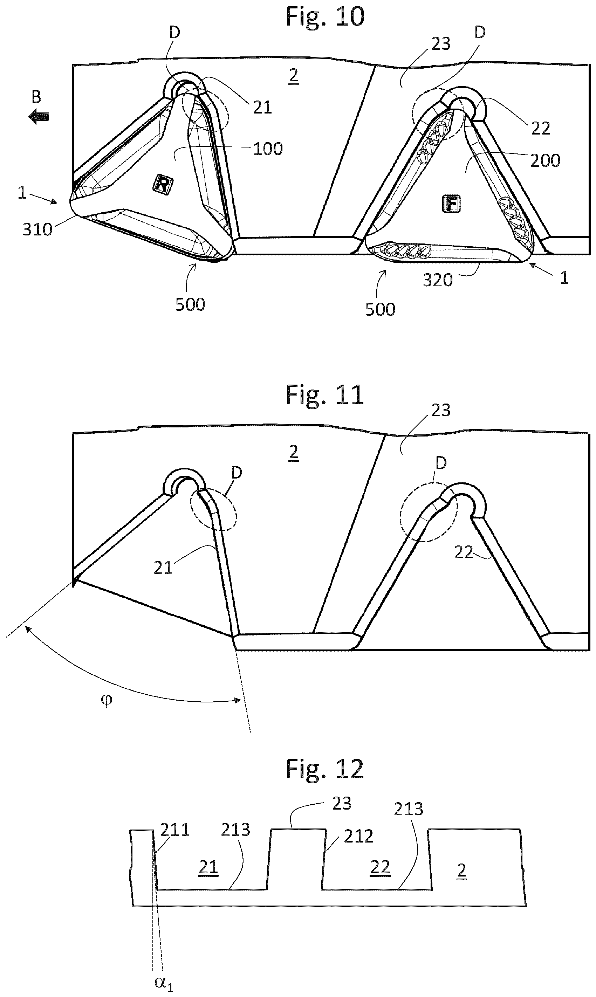

Figur 10 zeigt eine Anordnung umfassend einen Halter 2 mit zwei darin eingelegten Schneideinsätzen 1. Details einer Klemmung sind der Übersichtlichkeit halber nicht dargestellt.

Der bezüglich einer vorgesehenen Bearbeitungsrichtung B voranstehende Schneideinsatz 1 ist in der Darstellung links gezeigt. Er übernimmt die Grobbearbeitung, auch Schruppen genannt. Der voranstehende Schneideinsatz 1 ist im Halter 2 so angeordnet, dass die Oberseite 100 als Spanfläche wirkt.

Der bezüglich der Bearbeitungsrichtung B nachstehende, für eine Schlichtbearbeitung vorgesehene zweite, in der Darstellung rechts gezeigte Schneideinsatz 1 ist im Halter 2 so angeordnet, dass die Unterseite 200 als Spanfläche wirkt.

Die Schneideinsätze 1 sind in Plattensitze 21, 22 eingesetzt, welche Plattensitze 21, 22 als Vertiefungen im Halter 2 ausgebildet sind. Die Plattensitze 21, 22 bilden mit ihren seitlichen Anlageflächen jeweils eine Konturlinie zu einer Halteroberfläche 23.

Bevorzugt ist vorgesehen, dass wenigstens einer der Plattensitze 21, 22 hinsichtlich der Formgebung so ausgestaltet ist, dass ein Schneideinsatz 1 nur mit korrekter Orientierung von Oberseite 100 und / oder Unterseite 200 eingesetzt werden kann.

Im vorliegenden Beispiel weisen die Schneideinsätze 1 eine Inkongruenz der Außenkonturen von Oberseite 100 und Unterseite 200 auf derart, dass die Seitenkanten 310, 320 einen bezüglich ihrer Erstreckung asymmetrischen Verlauf aufweisen, wie zuvor bereits eingehend erläutert. Der Übergang 500 von Haupt- in Nebenschneide befindet sich außermittig bezüglich der Erstreckung der Seitenkanten 310, 320. Der Übergang 500 von Haupt- in Nebenschneide liegt an der Oberseite 100 außermittig, und zwar hinsichtlich der Erstreckung der Seitenkante 310 an dem der Bearbeitungsrichtung B abgewandten, hinteren Abschnitt der Seitenkante 310. An der Unterseite 200 befindet sich der Übergang 500 von Haupt- in Nebenschneide an einem vorderen, der Bearbeitungsrichtung B zugewandten Abschnitt der Seitenkante 320.

Im vorliegenden Beispiel sind seitliche Anlageflächen der Plattensitze 21, 22 korrespondierend zu Seitenflächen 300 der Schneideinsätze 1 ausgestaltet.

So weist der vordere Plattensitz 21 im als Detail D gekennzeichneten Bereich der bezüglich der Bearbeitungsrichtung B hinteren seitlichen Anlagefläche einen gekrümmten Abschnitt auf, welcher zum Übergang 500 von Haupt- in Nebenschneide des korrekt eingelegten Schneideinsatzes 1 korrespondiert.

Der hintere Plattensitz 22 weist auf der bezüglich der Bearbeitungsrichtung B vorderen seitlichen Anlagefläche im als Detail D gekennzeichneten Bereich einen gekrümmten Abschnitt auf, welcher zum Übergang 500 von Haupt- in Nebenschneide des korrekt eingelegten Schneideinsatzes 1 korrespondiert.

Das heißt, die Plattensitze 21, 22 weisen an wenigstens einer der seitlichen Anlageflächen einen Abschnitt auf, der an den asymmetrischen Verlauf einer Seitenkante 310, 320 des Schneideinsatzes 1 angepasst ist. Die zu der Halteroberfläche 23 gebildeten Konturlinien der Plattensitze 21, 22 sind inkongruent, sie lassen sich nicht - auch durch eine Drehung nicht - in Deckung bringen.

Dies bewirkt, dass im vorliegenden Beispiel in den vorderen Plattensitz 21 ein Schneideinsatz 1 mit asymmetrischem Verlauf einer Seitenkante 310 nur mit der Oberseite 100 nach oben weisend eingesetzt werden kann.

Für die Verwechslungssicherheit ist es ausreichend, wenn nur einer der Plattensitze 21, 22 eine an den asymmetrischen Verlauf einer Seitenkante 310, 320 des Schneideinsatzes 1 angepasste Formgebung aufweist. Bevorzugt allerdings ist eine geometrische Anpassung beider Plattensitze 21, 22 vorgesehen.

Figur 11 zeigt den Halter 2 von Figur 10 ohne Schneideinsätze. Plattensitze 21, 22 sind als Vertiefungen im Halter 2 ausgebildet sind. Die Plattensitze 21, 22 bilden mit ihren seitlichen Anlageflächen jeweils eine Konturlinie zu einer Halteroberfläche 23.

Ein in der Draufsicht ersichtlicher Öffnungswinkel φ der seitlichen Anlageflächen entspricht dem Innenwinkel des für den Plattensitz 21, 22 vorgesehenen Schneideinsatz. In diesem Fall beträgt der Öffnungswinkel φ 60° für einen Schneideinsatz mit dreieckiger Grundgestalt. Für einen Schneideinsatz mit quadratischer Grundgestalt verlaufen die seitlichen Anlageflächen in einem Winkel von 90° zueinander.

In den als Detail D gekennzeichneten Bereichen ist ersichtlich, dass die Plattensitze 21, 22 an eine von einem geraden Verlauf abweichende Kontur eines Schneideinsatzes angepasst sind. Im Speziellen ist vorgesehen, dass die zu einer Halteroberfläche 23 gebildeten Konturlinien der Plattensitze 21, 22 inkongruent sind. Anders ausgedrückt, sind die Konturlinien der der Plattensitze 21, 22 im geometrischen Sinne unähnlich. Dies eröffnet die Möglichkeit, Schneideinsätze mit einem entsprechend asymmetrischen Verlauf von Seitenkanten verwechslungssicher aufzunehmen.

Figur 12 zeigt schematisch eine weitere Ausführungsform eines Halters 2 in einer Vorderansicht. In dem vorliegenden Beispiel verlaufen seitliche Anlageflächen 211, 212 der Plattensitze 21, 22 geneigt zu einer Grundfläche 213. Zur Illustration ist ein erster Anlageflächen-Neigungswinkel α₁ eingetragen.

Der Anlageflächen-Neigungswinkel entspricht dabei bevorzugt einem Neigungswinkel der Seitenflächen eines hier nicht dargestellten Schneideinsatzes.

Diese Ausgestaltung der Plattensitze erlaubt eine verwechslungssichere Montage von Schneideinsätzen mit unterschiedlich großen Ober- und Unterseiten, also Schneideinsätzen mit einer in einer Seitenansicht konischer Gestalt.

Neben der Verwechslungssicherheit bietet der in der Figur rechts gezeigte Plattensitz 22 auch einen Formschluss gegenüber einem axialen Auszug normal zur Grundfläche 213.

Diese Ausgestaltung der Plattensitze kann mit dem in den Figuren 10 und 11 näher erläuterten Prinzip für Schneideinsätze mit asymmetrischem Verlauf von Seitenkanten kombiniert werden.

## Patentansprüche

1. Doppelseitiger, beidseitig verwendbarer Schneideinsatz (1) zum Schäldrehen mit polygonaler Grundform mit einer Oberseite (100) und einer davon verschiedenen Unterseite (200), Seitenflächen (300), an deren Übergang zu Oberseite (100) und Unterseite (200) Seitenkanten (310, 320) ausgebildet sind, welche Seitenkanten (310, 320) zumindest abschnittsweise als Schneidkanten (110, 210) ausgebildet sind,
wobei an der Oberseite (100) abschnittsweise Spanformstrukturen (400, 410) und an der Unterseite (200) abschnittsweise Spanformstrukturen (400, 420) ausgebildet sind, welche sich ausgehend von den Schneidkanten (110, 210) an der Oberseite (100) und der Unterseite (200) erstrecken,
wobei eine Außenkontur der Oberseite (100) verschieden ist von einer Außenkontur der Unterseite (200) derart, dass eine Draufsicht auf die Oberseite (100) inkongruent zu einer Draufsicht auf die Unterseite (200) ist.

2. Schneideinsatz (1) nach Anspruch 1, wobei Inkreise (IK) von Oberseite (100) und Unterseite (200) verschieden groß sind.

3. Schneideinsatz (1) nach Anspruch 1 oder 2, wobei eine Inkongruenz der Außenkonturen von Oberseite (100) und Unterseite (200) darin besteht, dass wenigstens eine Seitenkante (310, 320) einen bezüglich ihrer Erstreckung asymmetrischen Verlauf aufweist.

4. Schneideinsatz (1) nach einem der Ansprüche 1-3, wobei eine Seitenkante (310, 320) abgewinkelt zueinander verlaufende Schneidenabschnitte (HS, NS) umfasst, deren Übergang (500) bezüglich der Erstreckung der Seitenkante (310, 320) außermittig liegt.

5. Schneideinsatz (1) nach Anspruch 4, wobei eine Schneidkante (110) an der Oberseite (100) eine Schrupp-Hauptschneide (HS1) und eine dazu abgewinkelt verlaufende Schrupp-Nebenschneide (NS1) aufweist und eine Schneidkante (210) an der Unterseite (200) eine Schlicht-Hauptschneide (HS2) und eine dazu abgewinkelt verlaufende Schlicht-Nebenschneide (NS2) aufweist, wobei die Schrupp-Hauptschneide (HS1) wenigstens doppelt so lang ist wie die Schrupp-Nebenschneide (NS1) und die Schlicht-Nebenschneide (NS2) wenigstens doppelt so lang ist wie die Schlicht-Hauptschneide (HS2).

6. Schneideinsatz (1) nach Anspruch 4 oder 5, wobei die Schrupp-Hauptschneide (HS1) und die Schrupp-Nebenschneide (NS1) zueinander mit einem Außenwinkel zwischen 185° und 225° verlaufen.

7. Schneideinsatz (1) nach einem der Ansprüche 4-6, wobei die Hauptschneide (HS) einen im Wesentlichen geraden Verlauf aufweist.

8. Schneideinsatz (1) nach einem der vorangegangenen Ansprüche, wobei an der Oberseite (100) und an der Unterseite (200) abschnittsweise eine plane Auflagefläche (140, 240) zur Auflage des Schneideinsatzes (1) in einem Plattensitz ausgebildet ist, wobei die plane Auflagefläche (140) an der Oberseite (100) kleiner ist als die plane Auflagefläche (240) an der Unterseite (200).

9. Schneideinsatz (1) nach einem der vorangegangenen Ansprüche, wobei an einer Schneidkante (210) an der Unterseite (200) eine Stützfase (330) ausgebildet ist.

10. Schneideinsatz (1) nach einem der vorangegangenen Ansprüche, wobei ein Verhältnis der Länge der Schrupp-Hauptschneide (HS1) zur Länge der Seitenkante (310) zwischen 0,60 und 0,90 beträgt.

11. Schneideinsatz (1) nach einem der vorangegangenen Ansprüche, wobei ein Verhältnis der Länge der Schrupp-Hauptschneide (HS1) zum Durchmesser eines Inkreises (IK) des Schneideinsatzes (1) für
- dreieckige Schneideinsätze (1) zwischen 0,75 und 1,25 beträgt, für
- quadratische Schneideinsätze (1) zwischen 0,50 und 0,80 beträgt und für
- fünfeckige Schneideinsätze (1) zwischen 0,50 und 0,80 beträgt.

12. Anordnung umfassend einen Halter (2) und wenigstens zwei Schneideinsätze (1) nach einem der vorangegangenen Ansprüche, wobei der bezüglich einer vorgesehenen Bearbeitungsrichtung (B) voranstehende Schneideinsatz (1) mit der Oberseite (100) als Spanfläche angeordnet ist und der bezüglich der vorgesehenen Bearbeitungsrichtung (B) hintere Schneideinsatz (1) mit der Unterseite (200) als Spanfläche angeordnet ist.

13. Halter (2) mit wenigstens zwei Plattensitzen (21, 22), deren seitliche Anlageflächen (211, 212) jeweils Konturlinien zu einer Halteroberfläche (23) bilden und die Konturlinien der Plattensitze (21, 22) inkongruent sind.

14. Verfahren zum Schäldrehen, wobei in einem Halter (2) wenigstens zwei gleiche Schneideinsätze (1) nach einem der Ansprüche 3 -10 angeordnet sind, wobei der bezüglich einer Bearbeitungsrichtung (B) voranstehende Schneideinsatz (1) mit der für eine Grobbearbeitung ausgebildeten Oberseite (100) als Spanfläche wirkend angeordnet ist und ein bezüglich einer Bearbeitungsrichtung (B) nachstehender Schneideinsatz (1) mit der für eine Feinbearbeitung ausgebildeten Unterseite (200) als Spanfläche wirkend angeordnet ist.
